# EUROPÄISCHE PATENTSCHRIFT

(11) **EP 1 301 986 B1**
(45) Veröffentlichungstag und Bekanntmachung des Hinweises auf die Patenterteilung: **27.05.2015**
(21) Anmeldenummer: 01931399.8
(22) Anmeldetag: 29.03.2001
(51) Int. Cl.: H02P 9/00, H02J 7/16, H02P 9/30

(54) **VORRICHTUNG ZUR REGELUNG DES ERREGERSTROMES FÜR EINEN DREHSTROMGENERATOR**
DEVICE FOR CONTROL OF THE EXCITATION CURRENT FOR A THREE PHASE GENERATOR
DISPOSITIF DE REGULATION DU COURANT D'EXCITATION POUR UN GENERATEUR TRIPHASE

(30) Priorität: 07.06.2000 DE 10028135
(43) Veröffentlichungstag der Anmeldung: 16.04.2003
(73) Patentinhaber: ROBERT BOSCH GMBH, 70442 Stuttgart (DE)
(72) Erfinder: HENKEL, Achim, 72766 Reutlingen (DE); MILICH, Reinhard, 72770 Reutlingen (DE)
(86) Internationale Anmeldenummer: PCT/DE2001/001272
(87) Internationale Veröffentlichungsnummer: WO 2001/095475

(56) Entgegenhaltungen:
- DE-A- 19 732 961
- US-A- 4 670 705

## Beschreibung

### Stand der Technik

Die Erfindung geht aus von einer Vorrichtung zur Regelung des Erregerstromes für einen Drehstromgenerator mit den im Oberbegriff des Anspruchs 1 angegebenen Merkmalen. Eine derartige Vorrichtung ist aus der DE 197 32 961 A1 der Anmelderin bekannt. Sie beschreibt einen Spannungsregler für einen Drehstromgenerator, welcher Phasenwicklungen und eine Erregerwicklung aufweist. Weiterhin sind im bekannten Fall Mittel zur Erfassung und Auswertung einer der Phasenspannungen vorgesehen, wobei die Regelung des durch die Erregerwicklung fließenden Erregerstromes unter anderem in Abhängigkeit von der erfaßten Phasenspannung erfolgt. Die Auswertung des Phasensignals erfolgt unter Verwendung eines Fensterkomparators, wobei die obere und die untere Schwelle jeweils in der Weise verändert werden, daß bei ansteigender Spannung ein Erreichen der oberen Schwelle zu einem Ansteigen der Schwellen und bei fallender Spannung und Erreichen der unteren Schwelle ein Absenken der Schwellen erfolgt. Beide Schaltpunkte werden zur Bildung eines frequenzabhängigen Auswertesignals herangezogen und aus der so ermittelten Frequenz wird die Drehzahl des Generators ermittelt. Dies erlaubt unter anderem eine rasche Erkennung, ob der Generator noch steht oder ob er sich dreht, so daß unmittelbar nach der beginnenden Drehung von der Vorerregung in den eigentlichen Regelzustand übergegangen werden kann.

### Vorteile der Erfindung

Die erfindungsgemäße Vorrichtung mit den Merkmalen des Anspruchs 1 hat gegenüber der bekannten Vorrichtung den Vorteil, daß durch die beanspruchte Auswertung aller drei Phasenspannungen Rückschlüsse auf vorliegende Fehlfunktionen des Gleichrichters und der Ständerwicklungen gezogen werden können. Eine Absicherung der korrekten Funktionsweise des Gleichrichters und der Ständerwicklungen verhindert ein unkontrolliertes Verhalten mit möglicher Überhitzung des Systems. Dies erlaubt, daß mittels der Erfindung ein rechtzeitiges Erkennen eines Gefahrenpotentials für den Generator und das diesem benachbarte System möglich wird. Dadurch werden schwerwiegende Folgeschäden, die durch eine extreme Hitzeentwicklung entstehen können, verhindert.

Erzielt werden diese Vorteile durch die Verwendung einer Auswerteeinheit, welche drei Eingangsanschlüsse aufweist, wobei jeder dieser Eingangsanschlüsse mit einer der Phasenwicklungen des Drehstromgenerators verbunden ist. Die Auswerteeinheit wertet alle drei Phasenspannungen nach Amplitude und/oder Frequenz aus, um signifikante Abweichungen vom Soll-Verhalten erkennen zu können. Treten derartige signifikante Abweichungen auf, dann kann über den Spannungsregler des Generators die Auslastung der Erregerwicklung auf ein ungefährliches Maß beschränkt werden. Folglich wird gemäß der Erfindung beim Erkennen des Vorliegens einer eingeschränkten Funktionsfähigkeit von Gleichrichter und Ständer einer Überlastung und damit auch Folgeschäden am Generator und den umliegenden Modulen entgegengewirkt.

### Zeichnung

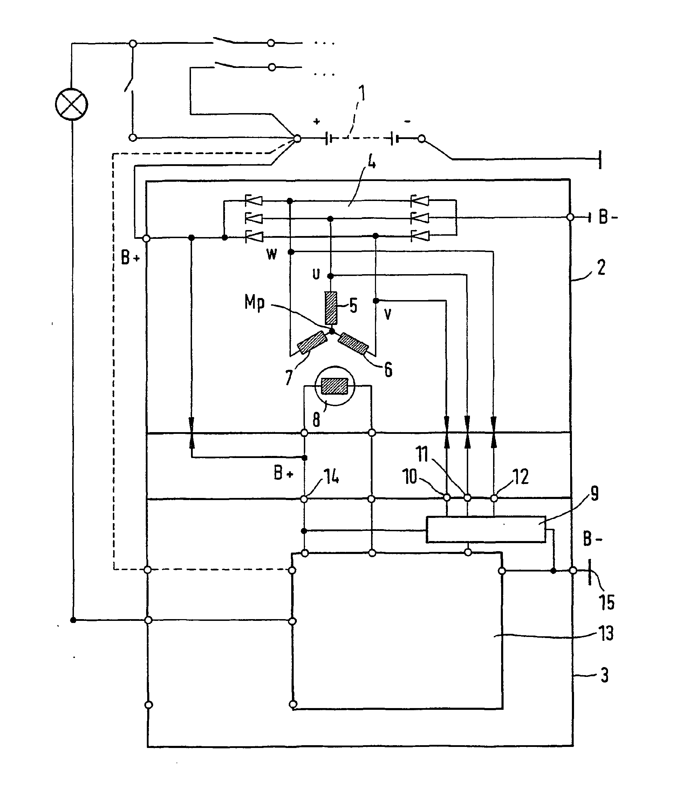

Ein Ausführungsbeispiel für die Erfindung ist in der Zeichnung dargestellt und wird in der nachfolgenden Beschreibung näher erläutert.

### Beschreibung des Ausführungsbeispiels

In der Figur ist ein Drehstromgenerator 2 an eine Batterie 1 angeschlossen. Weiterhin ist mit dem Drehstromgenerator 2 ein Regler 3 verbunden, welcher eine integrierte Auswerteeinheit 9 und eine Regeleinheit 13 aufweist.

Die Phasenwicklungen 5, 6, 7 des Drehstromgenerators sind über einen gemeinsamen Mittelpunkt M_{P} miteinander verbunden. Ebenso ist auch eine Dreiecksschaltung der Ständerphasen denkbar. Weiterhin sind die Phasenwicklungen 5, 6, 7 über Anschlüsse u, v, w mit den Zenerdioden einer Gleichrichterbrücke 4 verbunden. Die Gleichrichterbrücke 4 ist über den Anschluß B+ an den Pluspol der Batterie 1 sowie über den Anschluß B- an den Minuspol der Batterie 1 bzw. an Masse angeschlossen. An den Phasenwicklungen 5, 6, 7 entstehen die Phasenspannungen U, V, W. Weiterhin gehört dem Drehstromgenerator 2 eine Erregerwicklung 8 an.

Die Phasenspannungen U, V, W werden zum Erkennen von möglichen Fehlfunktionen des Gleichrichters 4 und der Phasenwicklungen 5, 6, 7 verwendet. Deshalb werden vor den Phasenwicklungen Abgriffpunkte v, u, w vorgesehen, die über Signalleitungen mit den Eingangsanschlüssen 10, 11, 12 der Auswerteeinheit 9 verbunden sind.

In der Auswerteeinheit 9 erfolgt eine Auswertung der von den drei Phasenwicklungen abgeleiteten Signale mit Bezug auf das Batteriepotential B+ und mit Bezug auf Massepotential B-. Zu diesem Zweck weist die Auswerteeinheit 9 einen vierten Eingang 14 und einen Anschluß 15 auf, wobei am Eingang 14 das Batteriepotential B+ und am Anschluß 15 Massepotential vorliegt. Das Ergebnis dieser Auswertung wird der Regeleinheit 13 zugeführt, die über den Ausgang 16 des Reglers 3 die Erregerwicklung 8 ansteuert.

Ergibt die Auswertung in der Auswerteeinheit 9, daß signifikante Abweichungen vom Soll-Verhalten vorliegen, dann wird dies als das Vorliegen einer eingeschränkten Funktionsfähigkeit von Gleichrichter und/oder einer der Phasenwicklungen angesehen und es wird über den Spannungsregler die Auslastung der Erregerwicklung auf ein ungefährliches Maß beschränkt, d.h. der durch die Erregerwicklung fließende Strom wird reduziert. Dadurch wird Folgeschäden am Generator und an den diesem benachbarten Modulen entgegengewirkt.

## Patentansprüche

1. Vorrichtung zur Regelung des Erregerstromes für einen Drehstromgenerator (2), mit
einer Spannungsquelle (1),
einem mit der Spannungsquelle (1) verbundenen Gleichrichter (4),
drei mit dem Gleichrichter (4) verbundene Phasenwicklungen (5, 6, 7),
einer mit den drei Phasenwicklungen (5, 6, 7) verbundenen Auswerteeinheit (9), und einem Spannungsregler (13), dessen Eingang mit der Auswerteeinheit (9) und dessen Ausgang mit der Erregerwicklung (8) des Drehstromgenerators verbunden ist,
**dadurch gekennzeichnet, dass**
die Auswerteeinheit (9) drei Eingangsanschlüsse (10,11,12) aufweist, wobei jeder dieser Eingangsanschlüsse mit einer der Phasenwicklungen (5, 6, 7) des Drehstromgenerators (2) verbunden ist,
die Auswerteeinheit (9) zur Auswertung der den drei Phasenwicklungen zugehörigen Phasenspannungen vorgesehen ist, um eine Fehlfunktion des Gleichrichters (4) und/oder eine Fehlfunktion einer der Phasenwicklungen (5, 6, 7) zu detektieren, und der Spannungsregler (3) beim Erkennen dieser Fehlfunktion den durch die Erregerwicklung (8) fließenden Erregerstrom reduziert.

2. Vorrichtung nach Anspruch 1, **dadurch gekennzeichnet, dass** die Auswerteeinheit (9) Bestandteil des Spannungsreglers (3) ist.

3. Vorrichtung nach Anspruch 1 oder 2, **dadurch gekennzeichnet, dass** die Auswerteeinheit (9) einen vierten Eingangsanschluss (14) aufweist, der mit dem Pluspol (B+) der Spannungsquelle (1) verbunden ist, und dass die Auswerteeinheit einen mit Massepotential (B-) verbundenen Anschluss (15) aufweist.

4. Vorrichtung nach einem der vorhergehenden Ansprüche, **dadurch gekennzeichnet, dass** die Auswerteeinheit (9) alle drei Phasenspannungen nach Amplitude und/oder Frequenz auswertet.

## Claims

1. Apparatus for regulating the field current for a three-phase generator (2), comprising a voltage source (1), a rectifier (4), which is connected to the voltage source (1), three phase windings (5, 6, 7), which are connected to the rectifier (4), an evaluation unit (9), which is connected to the three phase windings (5, 6, 7), and a voltage regulator (13) whose input is connected to the evaluation unit (9) and whose output is connected to the field winding (8) of the three-phase generator, **characterized in that** the evaluation unit (9) has three input connections (10, 11, 12), wherein each of these input connections is connected to one of the phase windings (5, 6, 7) of the three-phase generator (2), the evaluation unit (9) is intended for evaluating the phase voltages associated with the three phase windings in order to detect a malfunction of the rectifier (4) and/or a malfunction of one of the phase windings (5, 6, 7), and the voltage regulator (3) reduces the field current flowing through the field winding (8) when this malfunction is identified.

2. Apparatus according to Claim 1, **characterized in that** the evaluation unit (9) is part of the voltage regulator (3).

3. Apparatus according to Claim 1 or 2, **characterized in that** the evaluation unit (9) has a fourth input connection (14), which is connected to the positive terminal (B+) of the voltage source (1), and **in that** the evaluation unit has a connection (15) which is connected to ground potential (B-).

4. Apparatus according to one of the preceding claims, **characterized in that** the evaluation unit (9) evaluates all three phase voltages according to amplitude and/or frequency.

## Revendications

1. Dispositif de régulation du courant d'excitation pour un générateur de courant triphasé (2), comprenant
une source de tension (1),
un redresseur (4) connecté à la source de tension (1),
trois enroulements de phase (5, 6, 7) connectés au redresseur (4),
une unité d'analyse (9) connectée aux trois enroulements de phase (5, 6, 7),
et un régulateur de tension (13) dont l'entrée est connectée à l'unité d'analyse (9) et dont la sortie est connectée à l'enroulement excitateur (8) du générateur de courant triphasé,
**caractérisé en ce que**
l'unité d'analyse (9) présente trois raccords d'entrée (10, 11, 12), chacun de ces raccords d'entrée étant connecté à l'un des enroulements de phase (5, 6, 7) du générateur de courant triphasé (2),
l'unité d'analyse (9) est prévue pour analyser les tensions de phase associées aux trois enroulements de phase afin de détecter une fonction d'erreur du redresseur (4) et/ou une fonction d'erreur de l'un des enroulements de phase (5, 6, 7) et le régulateur de tension (3), à la détection de cette fonction d'erreur, réduit le courant d'excitation s'écoulant à travers l'enroulement excitateur (8).

2. Dispositif selon la revendication 1, **caractérisé en ce que** l'unité d'analyse (9) fait partie du régulateur de tension (3).

3. Dispositif selon la revendication 1 ou 2, **caractérisé en ce que** l'unité d'analyse (9) présente un quatrième raccord d'entrée (14) qui est connecté au pôle positif (B+) de la source de tension (1), et **en ce que** l'unité d'analyse présente un raccord (15) connecté au potentiel de la masse (B-).

4. Dispositif selon l'une quelconque des revendications précédentes, **caractérisé en ce que** l'unité d'analyse (9) analyse toutes les trois tensions de phase en termes de leur amplitude et/ou de leur fréquence.
